# EUROPEAN PATENT SPECIFICATION

(11) **EP 4 453 629 B1**
(45) Date of publication and mention of the grant of the patent: **23.09.2026**
(21) Application number: 22839728.7
(22) Date of filing: 16.12.2022
(51) Int. Cl.: G02B 21/16, G02B 21/36

(54) **OPTICAL IMAGING SYSTEM AND CORRESPONDING METHOD**
OPTISCHES ABBILDUNGSSYSTEM UND ENTSPRECHENDES VERFAHREN
SYSTÈME D'IMAGERIE OPTIQUE ET PROCÉDÉ CORRESPONDANT

(30) Priority: 21.12.2021 DE 102021133997
(43) Date of publication of application: 30.10.2024
(73) Proprietor: Leica Instruments (Singapore) Pte Ltd, Singapore 608924 (SG); Leica Microsystems CMS GmbH, 35578 Wetzlar (DE)
(72) Inventor: THEMELIS, George, Singapore 608924 (SG)
(74) Representative: 2SPL Patentanwälte PartG mbB
(86) International application number: PCT/EP2022/086358
(87) International publication number: WO 2023/117759

(56) References cited:
- US-A1- 2020 191 657
- US-A1- 2021 271 061

## Description

### Technical field

Examples relate to an optical imaging system, such as a microscope system, and to a corresponding method, more specifically, but not exclusively, to a concept for dealing with specular reflections in optical imaging.

### Background

In medical optical imaging, it is very common for the image to contain areas with specular reflections. Specular reflections often are so intense, that they saturate the sensor and thus hide any other information, e.g., color. Specular reflections can easily be removed optically by means of linear polarizers, but this approach may be considered less than ideal, as specular reflections are utilized by the human brain to understand the surface's properties, such as reflective or matte surfaces, and the three-dimensional structure, i.e., elevations or recesses.

Ideally, simultaneous capture of both images, with and without specular reflections would allow flexibility of the information being visualized, e.g., visualize the specular reflections less intense on top of the color information. However, independent, simultaneous capturing of the two images, with and without specular reflections requires more complex optical components. Typically, an additional imaging sensor with beam splitter and polarizers may be required. This would increase size, complexity, and cost. Newer imaging sensors allow color imaging with additional polarization resolution, but at expense of resolution and cost.

US 2021/271061 A1 discloses an observation device including an emission unit, an imaging unit, a polarization control unit, and a calculation unit.

There may be a desire for an improved concept for dealing with specular reflections in medical imaging.

### Summary

This desire is addressed by the subject-matter of the independent claims.

Various examples of the present disclosure is based on the finding, that existing hardware, e.g., an optical imaging sensor being used for fluorescence imaging, can be repurposed for capturing the specular reflections, with the main optical imaging sensor being used for capturing the object to be imaged without specular reflections. For multispectral imaging cameras such as the one used in fluorescence imaging, multiple sensors are employed, even though they are generally not used in all imaging modes. For example, the fluorescence camera is not used while on white light mode (where no fluorescence imaging is performed). One implementation of the proposed concept is to utilize the fluorescence imaging camera to capture the specular reflection image. Polarization filters are used to control the light incident to the respective sensors, such that the light captured by the main sensor is free of specular reflections, and the light captured by the fluorescence camera comprises the specular reflections. Examples thus provide an improved approach for independent specular reflection (i.e., glare) capture, e.g., using fluorescence imaging hardware, providing an alternative, more efficient method to capture images with and without specular reflections.

Various examples of the present disclosure relate to an optical imaging system, such as a (surgical) microscope system. The optical imaging system comprises an optical imaging component, such as a microscope, comprising a first optical imaging sensor and a second optical imaging sensor, with the optical imaging component being suitable for imaging an object. The optical imaging system comprises an illumination system for emitting light having a polarization towards the object. The optical imaging system comprises a polarization filter configured to block light having the polarization from arriving at the first optical imaging sensor. The system comprises a processing system comprising one or more processors and one or more storage devices. The processing system is configured to obtain first imaging sensor data from the first optical imaging sensor and second imaging sensor data from the second optical imaging sensor. The processing system is configured to generate a composite view based on the first imaging sensor data and based on the second imaging sensor data. By filtering the light having the polarization from the first optical imaging sensor, specular reflections can be removed from the first imaging sensor data. These specular reflections are, however, contained in the second imaging sensor data, and can be included in the composite view, albeit with less intensity, based on the second imaging sensor data, so that the user of the optical imaging component is able to obtain the three-dimensional impression of the object that is intuitively derived from the specular reflections, without the specular reflections obstructing the view on the details of the object.

In general, the polarization filter may be configured to filter out light having the polarization, so that specular reflections of the light emitted by the illumination system are omitted from a representation of the object in the first imaging sensor data. The second imaging sensor data, in contrast, comprises a representation of the specular reflections of the light emitted by the illumination system, as reflected by the object. Accordingly, the first imaging sensor data can be used to provide a highly detailed view of the sample, on which the toned-down specular reflections can be added based on the second imaging sensor data.

The processing system is configured to generate a further representation of the specular reflections based on the second imaging sensor data, and to combine the further representation of the specular reflections with the representation of the object included in the first imaging sensor data. In effect, the user of the optical imaging component may be enabled to obtain the three-dimensional impression of the object that is intuitively derived from the specular reflections, without the specular reflections obstructing the view on the details of the object.

In some examples, separate light sources (with non-overlapping wavelength spectra) may be used for generating the light being sensed by the first and second optical imaging sensor. For example, the illumination system may comprise a first light source and a second light source, with the first light source being configured to emit light in a first wavelength spectrum and the second light source being configured to emit light in a second wavelength spectrum. The first optical imaging sensor may be configured to sense light in the first wavelength spectrum and the second optical imaging sensor may be configured to sense light in the second wavelength spectrum. For example, the first wavelength spectrum may be non-overlapping with the second wavelength spectrum. This approach can be described as spectrally multiplexed polarization imaging, as it uses spectral bands to separate light with different polarization. This way, both the second light source and the second optical imaging sensor may be operated without a polarization filter. Accordingly, the illumination system may comprise a polarization filter being configured to filter the light emitted by the first light source, such that the light emitted in the first wavelength spectrum has the polarization. The second light source may be included in the illumination system without a polarization filter.

Specular reflections are useful for gaining a three-dimensional impression of the object being imaged. This impression can be improved by gathering spatial reflections caused by light emitted from different angles. In particular, light in different wavelength bands may be emitted from different angles and may be sensed separately by the second optical imaging sensor. Accordingly, the second optical imaging sensor may be configured to independently sense light in two or more mutually separated wavelength bands. The illumination system may comprise two or more spatially separated light sources being configured to emit light in the two or more wavelength bands towards the object from two or more different directions. By distinguishing specular reflections that are based on light emitted from different directions, additional specular reflections may be included in the composite view, or an animation of specular reflections being caused by light emitted from different angles may be included in the composite view.

For example, as outlined above, the second imaging sensor data may comprise a representation of specular reflections of the light emitted by the illumination system, as reflected by the object. The processing system may be configured to, for each of the two or more mutually separated wavelength bands, generate a separate further representation of the specular reflections of the light emitted in the respective wavelength band based on the second imaging sensor data, and to combine the resulting two or more further representations of the specular reflections with the representation of the object included in the first imaging sensor data in the composite view. This may add further spatial information to the three-dimensional impression of the object that is intuitively derived from the specular reflections.

To avoid overwhelming the user, the specular reflections being caused by light emitted from different directions might not be shown at the same time. Instead, an animation may be shown, which may successively show the specular reflections being caused by the light emitted from different directions. For example, the processing system may be configured to animate the specular reflections in the composite view by varying a contribution of the two or more further representations in the composite view. In particular, the processing system may be configured to animate the specular reflections in the composite view by varying the contribution of the two or more further representations in the composite view based on the direction the respective light is emitted from. For example, the animation may be provided such, that the user gains the impression that the light causing the specular reflections is moved at constant velocity in a circle around the object.

In general, the number of wavelength bands that can be separated by the second optical imaging sensor may be limited, e.g., limited to three to six wavelength bands. To gather specular reflections from even more angles, if the optical imaging component is a stereoscopic optical imaging component, e.g., a stereoscopic microscope, the second optical imaging sensors of the two stereo channels may both be used separately to sense the specular reflections to use for the composite view. Accordingly, the optical imaging component may be a stereoscopic optical imaging component comprising two first optical imaging sensors and two second optical imaging sensors, with the two first optical imaging sensors being configured to generate the first imaging sensor data and the two second optical imaging sensors being configured to generate the second imaging sensor data. The processing system may be configured to generate separate further representations of the specular reflections for each of the two or more mutually separated wavelength bands and for each of the two second optical imaging sensors.

In some examples, the optical imaging system comprises a second polarization filter configured to admit light having the polarization to the second optical imaging sensor. This way, the second optical imaging sensor may primarily sense the specular reflections, which may facilitate generating the representation of the specular reflections.

Alternatively, the second optical imaging sensor may be included in the optical imaging component without a polarization filter. In this case, the processing system may be configured to generate a representation of specular reflections shown in the second imaging sensor data based on a saturation of pixels of the second imaging sensor data caused by the specular reflections. Since specular reflections tend to saturate the image, saturated areas in the second imaging sensor data may be deemed to be caused by specular reflections.

The proposed concept may particularly be applied to surgical microscope systems, which may comprise separate optical imaging sensors for reflectance imaging and fluorescence imaging. In other words, the optical imaging system may be a surgical microscope system. Accordingly, one of the optical imaging sensors, e.g., the sensor used for fluorescence imaging, or the sensor used for reflectance imaging, may be used for sensing the specular reflections. For example, the processing system may be configured to generate the composite view in a first mode of operation, and to generate a second composite view that is based on reflectance imaging and fluorescence imaging in a second mode of operation. The processing system may be configured to use the first optical imaging sensor to perform the reflectance imaging and to use the second optical imaging sensor to perform the fluorescence imaging in the second mode of operation. This way, surgical microscope systems may be retrofitted or adapted with low effort to implement the proposed concept.

The composite view may be used by the user of the optical imaging system, e.g., by the surgeon using the surgical microscope system, to view the object via a display device, such as ocular displays or a large-screen display that is attached to the stand of the optical imaging system. Accordingly, the processing system may be configured to generate a display signal for a display device of the optical imaging system, with the display signal being based on the composite view.

Various examples of the present disclosure relate to a corresponding method for an optical imaging system. The method comprises emitting light having a polarization towards an object. The method comprises blocking light having the polarization from arriving at a first optical imaging sensor of an optical imaging component being used to image the object. The method comprises obtaining first imaging sensor data from the first optical imaging sensor and second imaging sensor data from a second optical imaging sensor of the optical imaging component. The method comprises generating a composite view based on the first imaging sensor data and based on the second imaging sensor data.

### Short description of the Figures

Some examples of apparatuses and/or methods will be described in the following by way of example only, and with reference to the accompanying figures, in which
- Fig. 1a: shows a schematic diagram of an example of an optical imaging system;
- Fig. 1b: shows a schematic diagram of an example of a surgical microscope system;
- Fig. 1c: shows a schematic diagram of an example of an optical imaging system with two separate light sources;
- Fig. 2: shows a flow chart of an example of a method for an optical imaging system;
- Fig. 3: shows a schematic diagram of another example of an optical imaging system with one light source;
- Fig. 4: shows a schematic diagram of another example of an optical imaging system with two light sources;
- Fig. 5: shows a schematic diagram of a surgical microscope system with three light sources that are spaced apart; and
- Fig. 6: shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

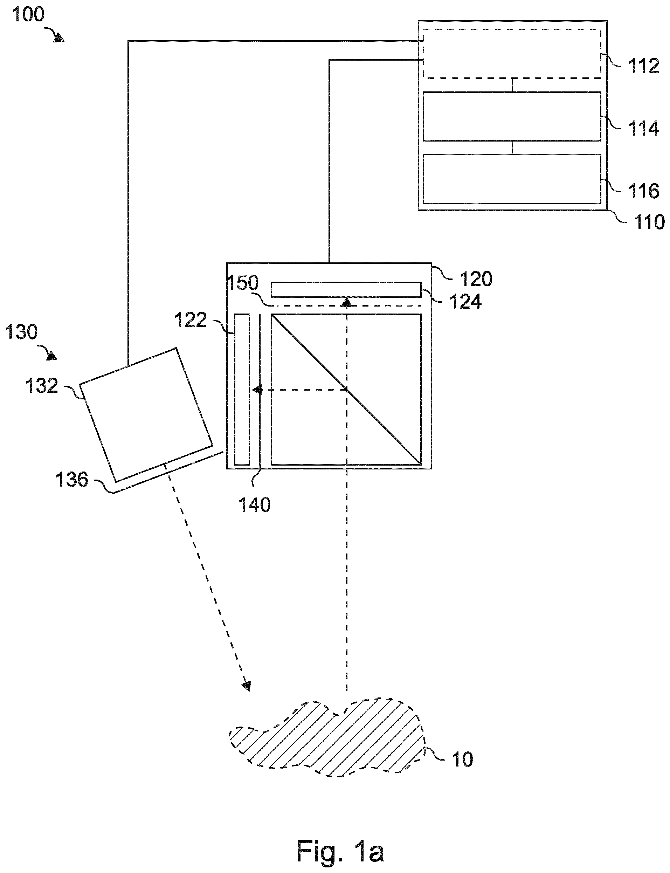

Fig. 1a shows a schematic diagram of an example of an optical imaging system 100, e.g., of a microscope system 100. In Figs. 1a to 1c, examples of optical imaging systems are shown, which are systems, which comprise an optical imaging component 120, such as a microscope, and additional components, which are operated together with the optical imaging component. In other words, an optical imaging system is a system that comprises the optical imaging component and one or more additional components, such as a processing system 110 (which is a computer system being adapted to process imaging sensor data of the optical imaging component) and an illumination system 130 (which is used to illuminate an object being imaged by the optical imaging component).

In the following, the optical imaging system is illustrated as microscope system, i.e., a system comprising a microscope and one or more additional components. However, the optical imaging system may be another type of optical imaging system as well, e.g., a medical imaging system, such as an endoscope or a surgical camera, or another type of optical imaging systems in general, such as a stereoscopic camera, a multi-sensor smartphone camera system, a multi-sensor drone camera, a multi-sensor surveillance camera (having separate optical imaging sensors for white light and infrared) etc.

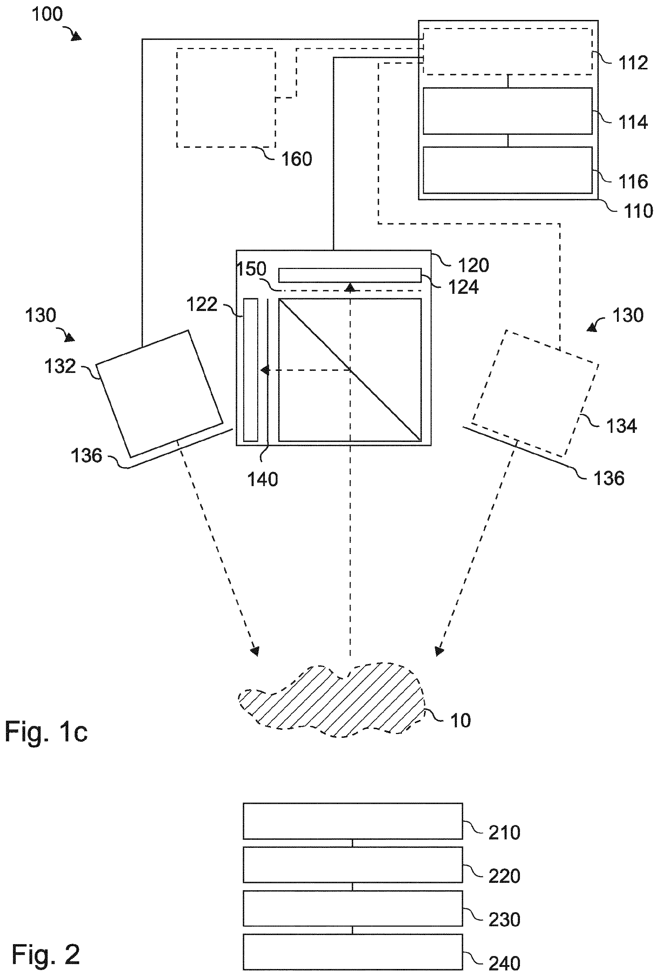

In general, a microscope, such as the optical imaging component 120, is an optical instrument that is suitable for examining objects that are too small to be examined by the human eye (alone). For example, a microscope may provide an optical magnification of a sample, such as a sample 10 shown in Figs. 1a to 1c. In modern microscopes, the optical magnification is often provided for a camera or an imaging sensor, such as a first optical imaging sensor 122 and a second optical imaging sensor 124 of the microscope 120 that are shown in Figs. 1a and 1c. The optical imaging component 120 may further comprise one or more optical magnification components that are used to magnify a view on the sample, such as an objective (i.e., lens).

The optical imaging component 120 comprises (at least) a first optical imaging sensor 122 and a second optical imaging sensor 124. The optical imaging component 120 is suitable for imaging the above-mentioned object 10. The optical imaging system further comprises an illumination system 130 for emitting light having a polarization towards the object. The optical imaging system comprises a polarization filter 140 configured to block light having the polarization from arriving at the first optical imaging sensor.

The optical imaging system 100 further comprises the above-mentioned processing system 110 comprising one or more processors 114 and one or more storage devices 116. Optionally, the processing system further comprises one or more interfaces 112. The one or more processors 114 are coupled to the one or more storage devices 116 and to the optional one or more interfaces 112. In general, the functionality of the processing system is provided by the one or more processors, in conjunction with the one or more interfaces (for exchanging information, e.g., with the optical imaging sensors of the optical imaging component and/or with a display device of the optical imaging system) and/or with the one or more storage devices (for storing and/or retrieving information). The processing system 110 is configured to obtain first imaging sensor data from the first optical imaging sensor and second imaging sensor data from the second optical imaging sensor. The processing system 110 is further configured to generate a composite view based on the first imaging sensor data and based on the second imaging sensor data.

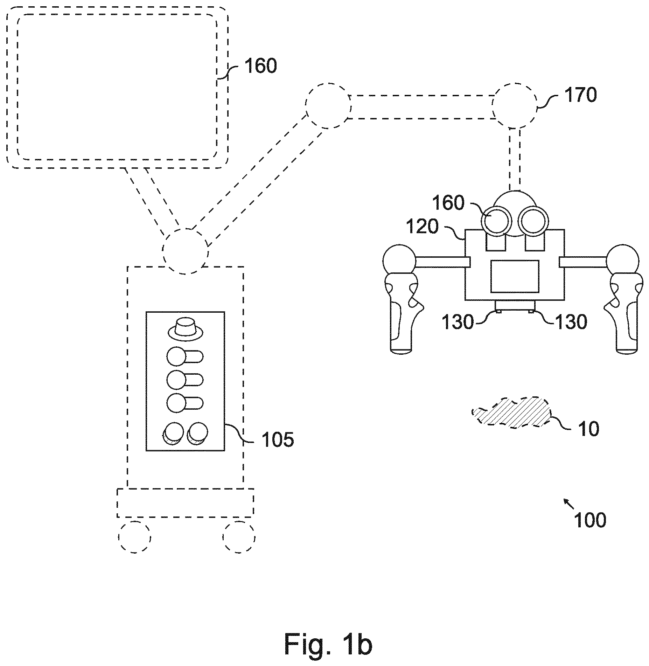

There are a variety of different types of microscopes. If the microscope is used in the medical or biological fields, the object 10 being viewed through the microscope may be a sample of organic tissue, e.g., arranged within a petri dish or present in a part of a body of a patient. For example, In Fig. 1b, the optical imaging component 120 is a microscope of a surgical microscope system, i.e., a microscope that is to be used during a surgical procedure, such as an oncological surgical procedure or during tumor surgery. Accordingly, the optical imaging system 100 may be a surgical microscope system 100. Such a system is shown in Fig. 1b, for example. Accordingly, an object being viewed through the optical imaging component, and shown in the image data, may be a sample of organic tissue of a patient, and may be in particular be a surgical site that the surgeon operates on during the surgical procedure.

Fig. 1b shows a schematic diagram of an example of a surgical microscope system 100 comprising the microscope 120, the processing system 110, the illumination system 130 and the polarization filter (not shown). The surgical microscope system 100 shown in Fig. 1b comprises a number of optional components, such as a base unit 105 (comprising the system 110) with a (rolling) stand, ocular displays 160 that are arranged at the microscope 120, an auxiliary display 160 that is arranged at the base unit and a (robotic or manual) arm 170 which holds the microscope 120 in place, and which is coupled to the base unit 105 and to the microscope 120. In the context of this application, the term "(surgical) microscope system" is used, in order to cover the portions of the system that are not part of the actual microscope (which comprises the optical components), but which are used in conjunction with the microscope, such as the processing system 110, display 160 or the illumination system 130.

The proposed concept is based on the insight that specular reflections (which are reflections at a surface where the angle of incident of the light equals the angle of reflection) have advantages and disadvantages in microscopy. On the one hand, specular reflections may saturate the imaging sensor data and may therefore obstruct the view on a sample in a digital viewer. On the other hand, specular reflections are useful for providing the user of an optical imaging system with an intuitive three-dimensional impression of the sample, as the user has learnt throughout life how reflections occur at various angles of such an object.

In general, the specular reflections may be removed completely from the digital view on the sample by using polarized light in combination with a filter that blocks the light having (exactly) the polarization from the optical imaging sensor being used. In this case, the light being captured by the optical imaging sensors corresponds to diffuse reflections, with the specular reflections being removed. However, such a view would lack the visual clues that provide the three-dimensional impression of the object for the user and may therefore make interaction of the user with the object less intuitive (e.g., during a surgical procedure).

In the proposed concept, this limitation is overcome using digital image processing. Two sets of imaging sensor data are generated - one without the specular reflections (i.e., the first imaging sensor data), and one comprising the specular reflections (i.e., the second imaging sensor data). These are combined in the composite view, in a manner that avoids the specular reflections obstructing the view on the sample, while adding enough clues to allow the user to perceive the three-dimensional impression of the effect. In the proposed optical imaging system, two sets of components are used for this purpose- a first set that comprises the illumination system 130, the filter 140 (or filters, as will be shown in the following) and the optical imaging sensors 122; 124 of the optical imaging component, and a second set that comprises the processing system 110. The first set is used to generate polarized light and to record the polarized light differently using two separate optical imaging sensors (with the first optical imaging sensor being blocked from recording the light having the polarization). The second set is used to process the imaging sensor data that is generated by the optical imaging sensors, and to generate the composite view.

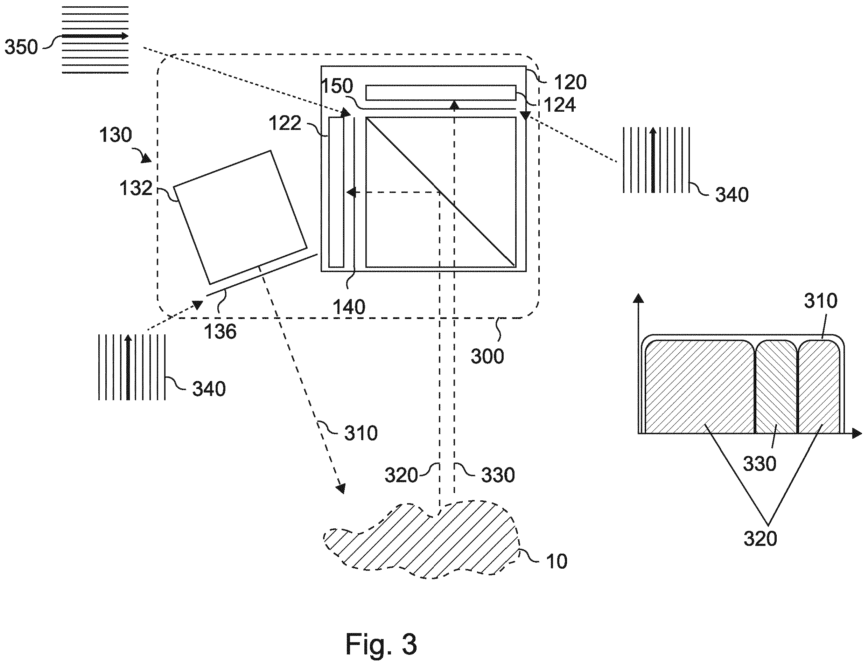

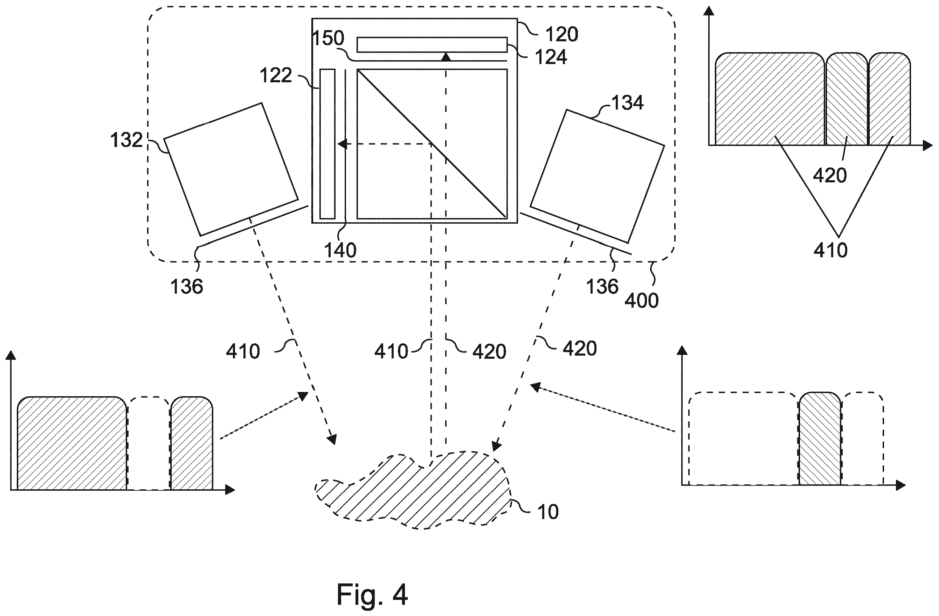

The illumination system 130 is used to emit the light having the polarization towards the object. For example, the illumination system 130 may comprise one or more light sources 132; 134 (as shown in Fig. 1c) that are configured to emit light towards the object 10. In addition, the illumination system may comprise one or more polarization filters 136 (as shown in Figs. 3 and 4), which may be configured to polarize the light emitted by at least one of the one or more light sources (such that polarized light is emitted towards the object 10). For example, the polarization filter or filters may be separate from the at least one light source, included in the at least one light source, or the light source may be inherently designed to emit polarized light.

There are various options for including polarization filters in the proposed optical imaging system. For example, at least two polarization filters may be used - an illumination polarization filter may be arranged between the at least one light source and the object, and the polarization filter 140 may be arranged between the object and the first optical imaging sensor 122. Optionally, a second polarization filter 150 may be arranged between the object and the second optical imaging sensor. In general, the illumination polarization filter may be configured to allow (only) light having the polarization to pass through. The polarization filter 140 may be configured to block the light having the polarization, such that the specular reflections are blocked from reaching the first optical imaging sensor (with the diffuse reflections being recorded by the first optical imaging sensor). In other words, the polarization filter 140 may be configured to filter out light having the polarization, so that specular reflections of the light emitted by the illumination system are omitted from a representation of the object in the first imaging sensor data. This can be achieved by the polarization filter having a polarization (direction) that is perpendicular to the polarization (direction) of the illumination polarization filter. The optional second polarization filter may be configured to let the light having the polarization pass, so that (only) the light having the polarization is incident to the second optical imaging sensor. Accordingly, the optical imaging system may comprise the second polarization filter 150 being configured to admit light having the polarization to the second optical imaging sensor. For example, the second polarization filter may have the same polarization (direction) as the illumination polarization filter.

Alternatively, the second optical imaging sensor may be included in the optical imaging component without a polarization filter. In other words, the second optical imaging sensor may be included in the optical imaging system such, that light of any polarization arrives at the second optical imaging sensor. In this case, the specular reflections may be isolated by using a different wavelength band (as shown in connection with Figs. 1c and 4) or by digital image processing. In the latter case, the processing system may be configured to generate a representation of specular reflections shown in the second imaging sensor data based on a saturation of pixels of the second imaging sensor data caused by the specular reflections. For example, the processing system may be configured to generate the representation of the specular reflections from pixels having sensed a light intensity that surpasses an intensity threshold.

If multiple image sources are used (at wavelengths being sensed by the first optical imaging sensor), multiple illumination polarization filters (136 as shown in Fig. 4) may be placed between the multiple light sources and the object.

As outlined above, the proposed optical imaging system may be a surgical microscope system, i.e., a microscope system for use during surgery. Many surgical microscope systems use multiple optical imaging sensors, with at least one of the optical imaging sensors being used for reflectance imaging and at least one other of the optical imaging sensors being used for fluorescence imaging. In fluorescence imaging, light having a wavelength that coincides with a fluorescence excitation wavelength band of a fluorophore is emitted towards the object being viewed through the optical imaging component. The fluorophore, which may be a chemical agent that is injected into blood vessels or tissue of a patent, is excited by the light in the fluorescence excitation wavelength band, and emits light in a fluorescence emission wavelength band, which is then sensed by the at least one optical imaging sensor being used for fluorescence imaging. In many cases, surgical microscope systems support a limited selection of fluorophores, with the optical imaging sensor or sensors being used for fluorescence imaging being tuned to the fluorescence emission wavelengths of the selection of fluorophores. During surgery, the reflectance image (showing the surgical site with "natural" colors) and the fluorescence image (as a pseudocolor overlay) may be combined in a further composite view, which can be viewed by the surgeon. Accordingly, the processing system is configured may be generate the composite view in a first mode of operation (i.e., in a mode of operation suitable for reducing the impact of specular reflections), and to generate a second composite view that is based on reflectance imaging and fluorescence imaging in a second mode of operation (in a combined reflectance and fluorescence imaging mode).

During reflectance imaging, this optical imaging sensor may be otherwise unused. In the proposed concept, the optical imaging sensor usually being used for fluorescence imaging may be repurposed for recording the specular reflections. Accordingly, the processing system may be configured to use the first optical imaging sensor to perform the reflectance imaging and to use the second optical imaging sensor to perform the fluorescence imaging in the second mode of operation. In other words, the first optical imaging sensor may generally be used for reflectance imaging in the optical imaging system, and the second optical imaging sensor may generally be used for fluorescence imaging in the optical imaging system. As a consequence, the second optical imaging sensor may be configured to sense, e.g., limited to sensing, a limited spectrum (i.e., the fluorescence emission wavelength bands), e.g., by a bandpass filter being arranged between the second optical imaging sensor and the object.

The processing system 110 is used to generate the composite view (or composite views) based on the first and second imaging sensor data. As outlined above, at least in the first imaging mode, the first imaging sensor data comprises a representation of the object without specular reflections (i.e., with the specular reflections being removed by the polarization filter 140), and the second imaging sensor data comprises a representation of specular reflections of the light emitted by the illumination system, as reflected by the object. As indicated by the term "composite view", the first and second imaging sensor data are combined to form the composite view. However, in some examples, the combination might not be straightforward, i.e., the first and second imaging sensor data might not just be overlaid. Instead, the second imaging sensor data may be processed by the processing system to generate a further representation of the specular reflections. In other words, the processing system may be configured to generate a further representation of the specular reflections based on the second imaging sensor data, and to combine the further representation of the specular reflections with the representation of the object included in the first imaging sensor data. For example, the processing system may be configured to isolate the specular reflections shown in the second imaging sensor data, e.g., based on the intensity of the light measured by the pixels of the second optical imaging sensor that is represented in the second imaging sensor data, or by using a portion of the second imaging sensor data that is based on a wavelength spectrum being used for generating the specular reflections (see Fig. 1c, for example). For example, the processing system may be configured to remove portions of the second imaging sensor data being caused by diffuse reflection in the generation of the further representation of the specular reflections. This further representation may be combined with the representation of the object contained in the first imaging sensor data to generate the composite view. For example, the processing system may be configured to overlay, merge, or superimpose the further representation with the representation of the object contained in the first imaging sensor data to generate the composite view. For example, a visibility of the further representation in the composite view may be reduced relative to a visibility of the specular reflections if the specular reflections were recorded by the first optical imaging sensor without the polarization filter 140.

The composite view may be viewed by the user, e.g., the surgeon, of the optical imaging system. For this purpose, it may be provided to the display, e.g., the auxiliary display or the ocular displays 160, of the optical imaging system. Accordingly, the processing system is configured to generate a display signal for a display device 160 of the optical imaging system, the display signal being based on the composite view. For example, the display signal may be a signal for driving (e.g., controlling) the display device 160. For example, the display signal may comprise video data and/or control instructions for driving the display. For example, the display signal may be provided via one of the one or more interfaces 112 of the system. Accordingly, the system 110 may comprise a video interface 112 that is suitable for providing the video signal to the display 160 of the optical imaging system 100.

In the following, an example of the proposed concept is shown, where (at least) two separate light sources with different wavelength spectra are used. Fig. 1c shows a schematic diagram of an example of an optical imaging system with two separate light sources. As shown in Fig. 1c, the illumination system may comprise a first light source 132 and a second light source 134, with the first light source being configured to emit light in a first wavelength spectrum and the second light source being configured to emit light in a second wavelength spectrum. For example, the first wavelength spectrum may be non-overlapping with the second wavelength spectrum. For example, the illumination system may comprise bandpass filters configured to limit the light emitted by the first light source 132 to the first wavelength spectrum, and to limit the light emitted by the second light source 134 to the second wavelength spectrum. Alternatively, the emission spectrum may be limited by the light source being used. In particular, the second light source may comprise one or more light-emitting diodes being configured to emit the light in one or more wavelength bands of the second wavelength spectrum. A broadband white light source (e.g., a light-emitting diode or a halogen light source) may be used as first light source, coupled with a suitable bandpass filter.

An example for the first and second wavelength spectra is shown in Fig. 4, where the first wavelength spectrum 410 being emitted by the first light source 134 is non-overlapping with the second wavelength spectrum 420 being emitted by the second light source 136. For example, as shown in Fig. 4, the first wavelength spectrum may cover the visible light spectrum, except for a portion of the visible light spectrum covered by the second wavelength spectrum (which may correspond to a fluorescence emission wavelength band). For example, returning to the example of the second optical imaging sensor imaging sensor generally being used for fluorescence imaging, the second wavelength spectrum may comprise (or correspond to) at least one fluorescence emission wavelength band. For example, the first wavelength spectrum may comprise at least two wavelength bands, with the wavelength band of the second wavelength spectrum being interspersed (i.e., located in-between) the wavelength bands of the first wavelength spectrum. For example, the lowest wavelength of the first wavelength spectrum may be smaller than the lowest wavelength of the second wavelength spectrum, and the highest wavelength of the first wavelength spectrum may be greater than the highest wavelength of the second wavelength spectrum. The first optical imaging may be being configured to sense light in the first wavelength spectrum and the second optical imaging sensor may be configured to sense light in the second wavelength spectrum. For example, the optical imaging component may comprise bandpass filters for limiting the light incident to the first optical imaging sensor to the first wavelength spectrum and for limiting the light incident to the second optical imaging sensor to the second wavelength spectrum. Alternatively (or additionally), the optical imaging component may comprise a dichroic or polychroic beam splitter to separate the light into the first and second wavelength spectra, with the beam splitter being arranged between the object and the optical imaging sensors.

By using different wavelength spectra for the first and second optical imaging sensors, both the second light source and the second optical imaging sensor may be operated without a polarization filter, as the light emitted by the second light source is not sensed by the first optical imaging sensor. Therefore, only the first light source might be operated with a polarization filter, with the illumination system comprising a polarization filter (i.e., the illumination polarization filter) being configured to filter the light emitted by the first light source, such that the light emitted in the first wavelength spectrum has the polarization. The second light source may be included in the illumination system without a polarization filter, i.e., no polarization filter might be present in the light path between the object and the second light source.

In general, the light of both the first and the second light source may arrive at the object from the same angle (i.e., the two illumination beams of the two light sources are merged). In other words, the light emitted by the first and by the second light source may be directed towards the object from the same direction.

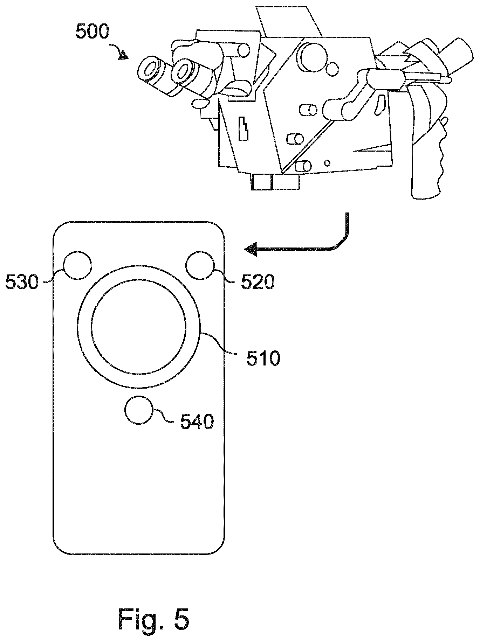

In some other examples, as shown in Figs. 1c and 4, the light of the two light sources may arrive from different angles, which may be achieved by spatially separating the light sources. In this case, the use of two separate wavelength spectra may be extended to increase the amount of specular reflection being sensed. For example, the first optical imaging sensor may be used to generate a white light image without the specular reflections. The second optical imaging sensor may be used to capture an image with specular reflections in one or more bands. For example, as shown in the following, the specular reflections may be sensed in two or more wavelength bands, based on light emitted by two or more spatially separated light sources. The second optical imaging sensor may be configured to independently sense light in two or more mutually separated wavelength bands (e.g., of the second wavelength spectrum). Accordingly, the illumination system may comprise two or more spatially separated light sources being configured to emit light in the two or more wavelength bands towards the object from two or more different directions. For example, the illumination system may comprise a first light source (being configured to emit light in the first wavelength spectrum) and two or more second spatially separated light sources (being configured to emit light in two or more wavelength bands of the second wavelength spectrum. For example, the illumination system may comprise, for each of the two or more mutually separated wavelength bands, a separate light source, with the separate light sources being spaced apart. For example, the light sources may be considered to be spatially separated or spaced apart if the two or more spatially separated light sources are spaced at least 2.5 cm (or at least 5 cm, or at least 10 cm) apart. For example, in Fig. 5, an example is shown with three separate light sources (light-emitting diodes) 520; 530; 540, which are arranged around the objective 510 of the microscope. For example, two or more spatially separated light sources may be spatially separated if the light sources are arranged in a regular (or irregular) pattern around the objective of the microscope, e.g., at a circumference of the objective.

The spatial separation of the two or more light sources may be used to increase the amount of specular information that can be included in the composite view. Since the angle of specular reflections equals the angle of incidents, if light is emitted from different directions, different specular reflections may be sensed by second optical imaging sensor. The second imaging sensor data may comprise a representation of specular reflections of the light emitted by the illumination system, as reflected by the object. For example, the second imaging sensor data may (concurrently or successively) comprise two or more representations of specular reflections of the light emitted in the two or more wavelength bands. In a basic implementation, the specular reflections caused by the two or more spatially separated light sources may be combined in a single further representation to be used for the composite view. However, to further improve utility of the three-dimensional, the specular reflections of the light being emitted from different directions may be shown alternatingly, to give the user/surgeon the impression that the object is being illuminated from different angles to highlight the three-dimensional structure of the object. For example, the processing system may be configured to, for each of the two or more mutually separated wavelength bands, generate a separate further representation of the specular reflections of the light emitted in the respective wavelength band based on the second imaging sensor data, and to combine the resulting two or more further representations of the specular reflections with the representation of the object included in the first imaging sensor data in the composite view.

By generating separate two or more further representations of the specular reflections, an additional degree of freedom is provided with respect to the inclusion of the specular reflections in the composite view. Again, in a simple implementation, the two or more further representations may be combined and shown at the same time in the composite view. Alternatively, the two or more further representations may be included alternatingly in the composite view. In particular, the processing system may be configured to animate the specular reflections in the composite view by varying a contribution of the two or more further representations in the composite view. For example, the processing system may be configured to vary the contribution of the two or more further representations by successively decreasing the contribution of one of the further representations and, at the same time, increasing the contribution of another of the further representations (creating a gradual transition between the two further representations). This animation may become more intuitive by taking into account the location of the light source causing the specular reflections, i.e., the direction of the light causing the specular reflections. For example, the processing system may be configured to animate the specular reflections in the composite view by varying the contribution of the two or more further representations in the composite view based on the direction the respective light is emitted from. For example, through digital image processing, the contribution may be varied to generate the impression that the light causing the specular reflections "travels" around the object (e.g., in a circular motion). For example, if the two or more spatially separated light sources are arranged at regular intervals at a circumference of the objective of the microscope, as shown in Fig. 5, the contributions of the further representations may be varied according to an order of the light sources causing the specular reflections around the circumference. For example, to yield the impression that the light travels around the circumference in a counter-clockwise manner from light source 520 to light source 530, the contribution of the further representation being based on the light of light source 520 may be gradually decreased and the contribution of the further representation being based on the light of light source 530 may be gradually increased, until (only) the further representation being based on the light of light source 530 is included in the composite view (apart from the representation of the object that is based on the first imaging sensor data). As the light "travels" further towards light source 540, the contribution of the further representation being based on the light of light source 530 may be gradually decreased and the contribution of the further representation being based on the light of light source 540 may be gradually increased, until (only) the further representation being based on the light of light source 540 is included in the composite view (apart from the representation of the object that is based on the first imaging sensor data). To return to light source 520, the contribution of the further representation being based on the light of light source 540 may be gradually decreased and the contribution of the further representation being based on the light of light source 520 may be gradually increased, until (only) the further representation being based on the light of light source 520 is included in the composite view (apart from the representation of the object that is based on the first imaging sensor data). The concept may be extended to a larger number of light sources (and also a larger number of optical imaging sensors, as will be shown in the following).

In general, microscopes being used in surgical microscope systems (and other microscope systems as well) may be stereoscopic microscopes (or more general, stereoscopic optical imaging components), i.e., the oculars may be provided with two separate views on the sample, e.g., via separate optical imaging sensors, such that the optical imaging component may comprise two first optical imaging sensors and two second optical imaging sensors. For example, the optical imaging component may be a stereoscopic optical imaging component, such as a stereoscopic microscope, comprising two first optical imaging sensors and two second optical imaging sensors, with the two first optical imaging sensors being configured to generate the first imaging sensor data and the two second optical imaging sensors being configured to generate the second imaging sensor data. Since two slightly different views are generated (to further contribute to the three-dimensional impression of the view on the sample), this additional spatial variation may be used to generate an even larger number of further representations of the specular reflections. In other words, the processing system may be configured to generate separate further representations of the specular reflections for each of the two or more mutually separated wavelength bands and for each of the two second optical imaging sensors. The further representations may be used in the generation of the composite view, e.g., to generate a more fluid animation. For example, the processing system may be configured to configured to animate the specular reflections in the composite view by varying the contribution of the further representations in the composite view, e.g., based on the direction the respective light is emitted from and based on which of the second optical imaging sensors the further representation is based on.

In the proposed optical imaging system, optical imaging sensors are used to provide the first and second imaging sensor data. Accordingly, the (two) first and second optical imaging sensors 122; 124 are configured to generate the first and second imaging sensor data, respectively. For example, the second optical imaging sensor can be operated at higher frame rate than the first optical imaging sensor, as the specular reflections are inherently characterized by high intensity and thus the sensor requires less exposure time than a sensor capturing diffuse reflectance images. For example, the optical imaging sensors 122; 124 of the optical imaging component 120 may comprise or be APS (Active Pixel Sensor) - or a CCD (Charge-Coupled-Device)-based imaging sensors 122; 124. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensors by a circuitry of the imaging sensors to perform the imaging. The processing system 110 may be configured to obtain (i.e., receive or read out) the respective imaging sensor data from the respective optical imaging sensors. The respective imaging sensor data may be obtained by receiving the imaging sensor data from the respective optical imaging sensor (e.g., via the interface 112), by reading the respective imaging sensor data out from a memory of the respective optical imaging sensor (e.g., via the interface 112), or by reading the imaging sensor data from a storage device 116 of the system 110, e.g., after the imaging sensor data has been written to the storage device 116 by the respective optical imaging sensor or by another system or processor. As shown in Figs. 1a, 1c, 3 and 4, the optical imaging component may comprise a beam splitter for guiding the light reflected or emitted by the object towards the first and the second optical imaging sensor.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the optical imaging system are mentioned in connection with the proposed concept, or one or more examples described above or below (e.g., Fig. 2 to 6). The optical imaging system may comprise one or more additional optional features corresponding to one or more aspects of the proposed concept, or one or more examples described above or below.

Fig. 2 shows a flow chart of an example of a corresponding method for an optical imaging system. The method comprises emitting 210 light having a polarization towards an object. The method comprises blocking 220 light having the polarization from arriving at a first optical imaging sensor of an optical imaging component being used to image the object. The method comprises obtaining 230 first imaging sensor data from the first optical imaging sensor and second imaging sensor data from a second optical imaging sensor of the optical imaging component. The method comprises generating 240 a composite view based on the first imaging sensor data and based on the second imaging sensor data.

For example, the method may be implemented by the optical imaging system introduced in connection with one of the Figs. 1a to 1c. Features introduced in connection with the optical imaging system of Figs. 1a to 1c may likewise be included in the corresponding method.

More details and aspects of the method for the optical imaging system are mentioned in connection with the proposed concept, or one or more examples described above or below (e.g., Fig. 1a to 1c, 3 to 6). The method for the optical imaging system may comprise one or more additional optional features corresponding to one or more aspects of the proposed concept, or one or more examples described above or below.

The proposed concept is based on the principle, that the illumination and one of the sensors (denoted sensor 1 in the following, which may be the white light sensor, e.g., the first optical imaging sensor) use linear polarizers with perpendicular orientations, so that the captured image does not contain any specular reflections. When performing fluorescence imaging, a sensitivity band of a second sensor (denoted sensor 2 in the following, e.g., the second optical imaging sensor) is not illuminated, thus the detected light is known to be based on fluorescence emissions. In the proposed concept, the illumination also covers the sensitivity band of sensor 2 so that it captures reflectance. The secondary sensor (sensor 2) is optionally covered with a linear polarizer parallel to the illumination polarizer so that the image contains intense specular reflections. In general, the specular reflections do not contain color information as the light is reflected on the object surface and the light does not interact with the material to be absorbed according to the material properties. Thus, a single wavelength or a narrow spectral band, as is being used for fluorescence imaging, is enough to capture the reflections (e.g., as monochrome image).

Fig. 3 shows a schematic diagram of the proposed concept, i.e., of an example of an optical imaging system, such as a microscope system with one light source. Fig. 3 shows a surgical microscope (system) 300 with an illumination source 132, which is coupled with a polarizing filter 136. The surgical microscope 300 is implemented similar to the optical imaging systems shown in Figs. 1a-1c. The surgical microscope comprises two sensors (sensor 1 122 and sensor 2 124), which are coupled with respective polarizing filters 140; 150. The polarization of the polarizing filter 150 coupled with the second sensor 124 corresponds to the polarization of the polarizing filter 136 coupled with the illumination source 132 and is orthogonal to the polarization employed by the polarizing filter 140 that is coupled with the first sensor 122. The surgical microscope further comprises a beam splitter for directed the light towards the first and second sensor. Fig. 3 further shows the respective spectra of the light 310 provided by the illumination source 132 of the light 320 captured by the first sensor 122, and of the light 330 captured by the second sensor. In the diagram shown on the right of Fig. 3, the x-axis denotes the wavelength, and the y-axis denotes the intensity. The spectrum 310 of the illumination source covers the non-overlapping spectra 320; 330 of the light captured by the respective sensors, with the wavelength band 330 captured by the second sensor being flanked on both sides by wavelength bands 320 captured by the first sensor.

In an alternative illumination configuration, shown in Fig. 4, the illumination of the first illumination source 132 only contains the spectral bands 410 the white light sensor detects. Fig. 4 shows a schematic diagram of another example of the proposed concept of a surgical microscope (system) 400 with two light sources, which is implemented similar to the surgical microscope systems shown in Fig. 1a-1c and/or 3. The light for the spectral band 420 of the secondary sensor is provided by a separate light source 134, e.g., an LED. In Fig. §B, the secondary sensor 124 and the second light source 134 are shown with corresponding polarizing filters 150; 136 (i.e., polarizing filters having the same polarization), and the first sensor 122 and the first light source 132 are likewise shown with corresponding polarizing filters 140; 136. However, it is not necessary that the second light source and/or the second sensor employs a polarizer since it would not be detected by sensor 1 to create specular reflections.

If the second sensor 124 is multispectral, i.e., capable to detect light from two or more spectral bands, then multiple separate light sources can be used (e.g., multiple LEDs), with each one being spectrally aligned to the detection bands of the secondary sensor. By positioning each secondary light source at different illumination angles, it would allow to capture simultaneously the specular reflections created from different angles. Fig. 5 shows a simple implementation of the proposed concept, adapted to the hardware of an existing surgical microscope that is capable of capturing light in multiple fluorescence emission bands. Fig. 5 shows a schematic diagram of an example of a surgical microscope 500 with three light sources, which may be implemented similar to the surgical microscopes shown in connection with Figs. 1a-1c, 3 and/or 4. Fig. 5 shows a side view and a bottom view of the surgical microscope 500. In the bottom view, the objective 510, and three Light-Emitting Diodes (LEDs) 520 (a 630 nm LED being used for fluorescence imaging in the 400 nm band), 530 (a 530 nm LED being used for fluorescence imaging with fluorophores having an excitation frequency at 530 nm), and 540 (an 830 nm LED being used for fluorescence imaging with fluorophores having an excitation frequency at 830 nm. The three LEDs are arranged at different positions around the objective, leading to different illumination angles. The fluorescence imaging hardware is used to capture simultaneously the diffuse reflection and specular reflection at three different illumination angles.

The number of angles of specular reflections captured simultaneously is limited by the number of spectral bands the system can capture in parallel to the white light image. However, the secondary sensor(s) that capture the specular reflections can be operated at higher frame rate as the specular reflections are inherently characterized by high intensity and thus the sensor requires less exposure time than a sensor capturing diffuse reflectance images (what typically captured in standard white light imaging). Thus, it is possible to use multiple sets of secondary light sources which turn on sequentially in groups, so that within the exposure time of one white light image, they all turn on.

The captured data of such a system, consisting of a white light image and multiple specular reflection images, e.g., 30, may be used to visualize the imaged object as being illuminated from a specific angle (one of the 30 angles) thus allowing the user to achieve the optimal highlight of the 3D structure of the object surface. This may be done offline, allowing the surgeon to examine the tissue with the desired amount and angle of specular reflection.

The specular reflections can also be used to calculate the 3D structure of the tissue surface, as each reflection seen on an image indicates that the object surface at that point has a specific angle relative to illumination and observation geometry angles.

More details and aspects of the proposed optical imaging system are mentioned in connection with the proposed concept, or one or more examples described above or below (e.g., Fig. 1a to 2, 6). The optical imaging system may comprise one or more additional optional features corresponding to one or more aspects of the proposed concept, or one or more examples described above or below.

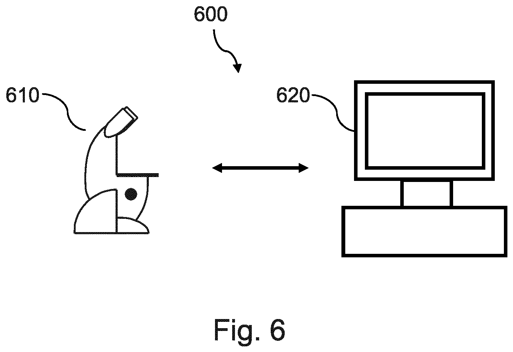

Some embodiments relate to a microscope comprising a system as described in connection with one or more of the Figs. 1 to 5. Alternatively, a microscope may be part of or connected to a system as described in connection with one or more of the Figs. 1 to 5. Fig. 6 shows a schematic illustration of a system 600 configured to perform a method described herein. The system 600 comprises a microscope 610 (which may correspond to the microscope 120 introduced in connection with Figs. 1a to 5) and a computer system 620 (which may correspond to the processing system 110 introduced in connection with Figs. 1a to 1c). The microscope 610 is configured to take images and is connected to the computer system 620. The computer system 620 is configured to execute at least a part of a method described herein. The computer system 620 may be configured to execute a machine learning algorithm. The computer system 620 and microscope 610 may be separate entities but can also be integrated together in one common housing. The computer system 620 may be part of a central processing system of the microscope 610 and/or the computer system 620 may be part of a subcomponent of the microscope 610, such as a sensor, an actor, a camera or an illumination unit, etc. of the microscope 610.

The computer system 620 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 620 may be a custom circuit, an application-specific integrated circuit (ASlC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention not according to the claims comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments not according to the claims comprise the computer program for performing one of the methods described herein, stored on a machine readable carrier.

In other words, an embodiment of the present invention not according to the claims is, therefore, a computer program having a program code for performing one of the methods described herein, when the computer program runs on a computer.

A further embodiment of the present invention not according to the claims is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention not according to the claims is, therefore, a data stream or a sequence of signals representing the computer program for performing one of the methods described herein. The data stream or the sequence of signals may, for example, be configured to be transferred via a data communication connection, for example, via the internet.

A further embodiment not according to the claims comprises a processing means, for example, a computer or a programmable logic device, configured to, or adapted to, perform one of the methods described herein.

A further embodiment not according to the claims comprises a computer having installed thereon the computer program for performing one of the methods described herein.

A further embodiment according to the invention not according to the claims comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference Signs

- 10: Object
- 100: Optical imaging system, (surgical) microscope system
- 105: Stand
- 110: Processing system
- 112: One or more interfaces
- 114: One or more processors
- 116: One or more storage devices
- 120: Optical imaging component, microscope
- 122: First optical imaging sensor
- 124: Second optical imaging sensor
- 130: Illumination system
- 132: First lights source
- 134: Second light source
- 136, 140, 150: Polarization filters
- 160: Display
- 170: Arm
- 210: Emitting light having a polarization towards an object
- 220: Blocking light having the polarization
- 230: Obtaining first and second imaging sensor data
- 240: Generating a composite view
- 300: Surgical microscope system
- 310: Spectrum of light provided by the illumination source
- 320: Spectrum of light captured by first sensor
- 330: Spectrum of light captured by second sensor
- 400: Surgical microscope system
- 410: Spectral band of first sensor
- 420: Spectral band of second sensor
- 500: Surgical microscope
- 510: Objective
- 520, 530, 540: Light sources
- 600: System
- 610: Microscope
- 620: Computer system

## Claims

1. An optical imaging system (100; 300; 400; 500; 600) comprising:
an optical imaging component (120; 610) comprising a first optical imaging sensor (122) and a second optical imaging sensor (124), the optical imaging component being suitable for imaging an object (10);
an illumination system (130) for emitting light having a polarization towards the object;
a polarization filter (140) configured to block light having the polarization from arriving at the first optical imaging sensor;
a processing system (110; 620) comprising one or more processors (114) and one or more storage devices (116), wherein the processing system is configured to:
obtain first imaging sensor data from the first optical imaging sensor and second imaging sensor data from the second optical imaging sensor,
generate a composite view based on the first imaging sensor data and based on the second imaging sensor data, wherein the second imaging sensor data comprises a representation of specular reflections of the light emitted by the illumination system, as reflected by the object,
**characterised in that** the processing system is further configured to generate a further representation of the specular reflections based on the second imaging sensor data, and
combine the further representation of the specular reflections with a representation of the object included in the first imaging sensor data.

2. The optical imaging system according to claim 1, wherein the polarization filter is configured to filter out light having the polarization, so that specular reflections of the light emitted by the illumination system are omitted from a representation of the object included in the first imaging sensor data.

3. The optical imaging system according to one of the claims 1 to 2, wherein the illumination system comprises a first light source (132) and a second light source (134), with the first light source being configured to emit light in a first wavelength spectrum and the second light source being configured to emit light in a second wavelength spectrum, the first optical imaging sensor being configured to sense light in the first wavelength spectrum and the second optical imaging sensor being configured to sense light in the second wavelength spectrum, the first wavelength spectrum being non-overlapping with the second wavelength spectrum.

4. The optical imaging system according to claim 3, wherein the illumination system comprises a polarization filter being configured to filter the light emitted by the first light source, such that the light emitted in the first wavelength spectrum has the polarization, wherein the second light source is included in the illumination system without a polarization filter.

5. The optical imaging system according to any one of the preceding claims, wherein the second optical imaging sensor is configured to independently sense light in two or more mutually separated wavelength bands, wherein the illumination system comprises two or more spatially separated light sources (132; 134) being configured to emit light in the two or more wavelength bands towards the object from two or more different directions.

6. The optical imaging system according to claim 5, wherein the second imaging sensor data comprises a representation of specular reflections of the light emitted by the illumination system, as reflected by the object, wherein the processing system is configured to, for each of the two or more mutually separated wavelength bands, generate a separate further representation of the specular reflections of the light emitted in the respective wavelength band based on the second imaging sensor data, and to combine the resulting two or more further representations of the specular reflections with the representation of the object included in the first imaging sensor data in the composite view.

7. The optical imaging system according to claim 6, wherein the processing system is configured to animate the specular reflections in the composite view by varying a contribution of the two or more further representations in the composite view.

8. The optical imaging system according to one of the claims 6 or 7, wherein the processing system is configured to animate the specular reflections in the composite view by varying the contribution of the two or more further representations in the composite view based on the direction the respective light is emitted from.

9. The optical imaging system according to one of the claims 6 to 8, wherein the optical imaging component is a stereoscopic optical imaging component, such as a stereoscopic microscope, comprising two first optical imaging sensors and two second optical imaging sensors, the two first optical imaging sensors being configured to generate the first imaging sensor data and the two second optical imaging sensors being configured to generate the second imaging sensor data, wherein the processing system is configured to generate separate further representations of the specular reflections for each of the two or more mutually separated wavelength bands and for each of the two second optical imaging sensors.

10. The optical imaging system according to any one of the preceding claims, further comprising a second polarization filter (150) configured to admit light having the polarization to the second optical imaging sensor.

11. The optical imaging system according to any one of the preceding claims, wherein the second optical imaging sensor is included in the optical imaging component without a polarization filter, wherein the processing system is configured to generate a representation of specular reflections shown in the second imaging sensor data based on a saturation of pixels of the second imaging sensor data caused by the specular reflections.

12. The optical imaging system according to an one of the preceding claims, wherein the processing system is configured to generate the composite view in a first mode of operation, and to generate a second composite view that is based on reflectance imaging and fluorescence imaging in a second mode of operation, with the processing system being configured to use the first optical imaging sensor to perform the reflectance imaging and to use the second optical imaging sensor to perform the fluorescence imaging in the second mode of operation.

13. The optical imaging system according to any one of the preceding claims, wherein the processing system is configured to generate a display signal for a display device (160) of the optical imaging system, the display signal being based on the composite view.

14. The optical imaging system according to any one of the preceding claims, wherein the optical imaging system is a microscope system, such as a surgical microscope system.

15. A method for an optical imaging system, the method comprising:
emitting (210) light having a polarization towards an object;
blocking (220) light having the polarization from arriving at a first optical imaging sensor of an optical imaging component being used to image the object;
obtaining (230) first imaging sensor data from the first optical imaging sensor and second imaging sensor data from a second optical imaging sensor of the optical imaging component; and
generating (240) a composite view based on the first imaging sensor data and based on the second imaging sensor data, wherein the second imaging sensor data comprises a representation of specular reflections of the light emitted by the illumination system, as reflected by the object,
the method being **characterised by** further comprising generating a further representation of the specular reflections based on the second imaging sensor data, and
combining the further representation of the specular reflections with the representation of the object included in the first imaging sensor data.

## Patentansprüche

1. Optisches Abbildungssystem (100; 300; 400; 500; 600), umfassend:
optische Abbildungskomponente (120; 610), umfassend einen ersten optischen Abbildungssensor (122) und einen zweiten optischen Abbildungssensor (124), wobei die optische Abbildungskomponente zum Abbilden eines Objekts (10) geeignet ist;
ein Beleuchtungssystem (130) zum Emittieren von Licht mit einer Polarisation in Richtung auf das Objekt;
ein Polarisationsfilter (140), der dazu konfiguriert ist, Licht mit der Polarisation daran zu hindern, zu dem ersten optischen Abbildungssensor zu gelangen;
ein Verarbeitungssystem (110; 620), umfassend einen oder mehrere Prozessoren (114) und eine oder mehrere Speichervorrichtungen (116), wobei das Verarbeitungssystem dazu konfiguriert ist:
erste Bildsensordaten von dem ersten optischen Abbildungssensor und zweite Bildsensordaten von dem zweiten optischen Abbildungssensor zu erhalten,
eine zusammengesetzte Ansicht basierend auf den ersten Bildsensordaten und basierend auf den zweiten Bildsensordaten zu erzeugen, wobei die zweiten Bildsensordaten eine Darstellung von spiegelnden Reflexionen des von dem Beleuchtungssystem emittierten Lichts umfassen, wie es von dem Objekt reflektiert wird,
**dadurch gekennzeichnet, dass** das Verarbeitungssystem weiter dazu konfiguriert ist, eine weitere Darstellung der spiegelnden Reflexionen basierend auf den zweiten Bildsensordaten zu erzeugen und die weitere Darstellung der spiegelnden Reflexionen mit einer in den ersten Bildsensordaten enthaltenen Darstellung des Objekts zu kombinieren.

2. Optisches Abbildungssystem nach Anspruch 1, wobei der Polarisationsfilter dazu konfiguriert ist, Licht mit der Polarisation herauszufiltern, so dass spiegelnde Reflexionen des von dem Beleuchtungssystem emittierten Lichts aus einer in den ersten Bildsensordaten enthaltenen Darstellung des Objekts ausgelassen werden.

3. Optisches Abbildungssystem nach einem der Ansprüche 1 bis 2, wobei das Beleuchtungssystem eine erste Lichtquelle (132) und eine zweite Lichtquelle (134) umfasst, wobei die erste Lichtquelle dazu konfiguriert ist, Licht in einem ersten Wellenlängenspektrum zu emittieren, und wobei die zweite Lichtquelle dazu konfiguriert ist, Licht in einem zweiten Wellenlängenspektrum zu emittieren, wobei der erste optische Abbildungssensor dazu konfiguriert ist, Licht in dem ersten Wellenlängenspektrum zu erfassen, und der zweite optische Abbildungssensor dazu konfiguriert ist, Licht in dem zweiten Wellenlängenspektrum zu erfassen, wobei das erste Wellenlängenspektrum sich nicht mit dem zweiten Wellenlängenspektrum überlappt.

4. Optisches Abbildungssystem nach Anspruch 3, wobei das Beleuchtungssystem einen Polarisationsfilter umfasst, der dazu konfiguriert ist, das von der ersten Lichtquelle emittierte Licht zu filtern, so dass das in dem ersten Wellenlängenspektrum emittierte Licht die Polarisation aufweist, wobei die zweite Lichtquelle ohne einen Polarisationsfilter in dem Beleuchtungssystem enthalten ist.

5. Optisches Abbildungssystem nach einem der vorstehenden Ansprüche, wobei der zweite optische Abbildungssensor dazu konfiguriert ist, Licht in zwei oder mehr gegenseitig getrennten Wellenlängenbändern unabhängig zu erfassen, wobei das Beleuchtungssystem zwei oder mehr räumlich getrennte Lichtquellen (132; 134) umfasst, die dazu konfiguriert sind, Licht in den zwei oder mehr Wellenlängenbändern aus zwei oder mehr verschiedenen Richtungen in Richtung auf das Objekt zu emittieren.

6. Optisches Abbildungssystem nach Anspruch 5, wobei die zweiten Bildsensordaten eine Darstellung von spiegelnden Reflexionen des von dem Beleuchtungssystem emittierten Lichts, wie von dem Objekt reflektiert, umfassen, wobei das Verarbeitungssystem dazu konfiguriert ist, für jedes der zwei oder mehr gegenseitig getrennten Wellenlängenbänder eine separate weitere Darstellung der spiegelnden Reflexionen des in dem jeweiligen Wellenlängenband emittierten Lichts basierend auf den zweiten Bildsensordaten zu erzeugen, und die resultierenden zwei oder mehr weiteren Darstellungen der spiegelnden Reflexionen mit der in den ersten Bildsensordaten enthaltenen Darstellung des Objekts in der zusammengesetzten Ansicht zu kombinieren.

7. Optisches Abbildungssystem nach Anspruch 6, wobei das Verarbeitungssystem dazu konfiguriert ist, die spiegelnden Reflexionen in der zusammengesetzten Ansicht zu animieren, indem ein Beitrag der zwei oder mehr weiteren Darstellungen in der zusammengesetzten Ansicht variiert wird.

8. Optisches Abbildungssystem nach einem der Ansprüche 6 oder 7, wobei das Verarbeitungssystem dazu konfiguriert ist, die spiegelnden Reflexionen in der zusammengesetzten Ansicht zu animieren, indem der Beitrag der zwei oder mehr weiteren Darstellungen in der zusammengesetzten Ansicht basierend auf der Richtung variiert wird, aus der das jeweilige Licht emittiert wird.

9. Optisches Abbildungssystem nach einem der Ansprüche 6 bis 8, wobei die optische Abbildungskomponente eine stereoskopische optische Abbildungskomponente ist, wie zum Beispiel ein stereoskopisches Mikroskop, umfassend zwei erste optische Abbildungssensoren und zwei zweite optische Abbildungssensoren, wobei die zwei ersten optischen Abbildungssensoren dazu konfiguriert sind, die ersten Bildsensordaten zu erzeugen, und die zwei zweiten optischen Abbildungssensoren dazu konfiguriert sind, die zweiten Bildsensordaten zu erzeugen, wobei das Verarbeitungssystem dazu konfiguriert ist, separate weitere Darstellungen der spiegelnden Reflexionen für jedes der zwei oder mehr gegenseitig getrennten Wellenlängenbänder und für jeden der zwei zweiten optischen Abbildungssensoren zu erzeugen.

10. Optisches Abbildungssystem nach einem der vorstehenden Ansprüche, weiter umfassend einen zweiten Polarisationsfilter (150), der dazu konfiguriert ist, Licht mit der Polarisation zu dem zweiten optischen Abbildungssensor durchzulassen.

11. Optisches Abbildungssystem nach einem der vorstehenden Ansprüche, wobei der zweite optische Abbildungssensor ohne einen Polarisationsfilter in der optischen Abbildungskomponente enthalten ist, wobei das Verarbeitungssystem dazu konfiguriert ist, eine Darstellung von in den zweiten Bildsensordaten gezeigten spiegelnden Reflexionen basierend auf einer Sättigung von Pixeln der zweiten Bildsensordaten, die durch die spiegelnden Reflexionen verursacht wird, zu erzeugen.

12. Optisches Abbildungssystem nach einem der vorstehenden Ansprüche, wobei das Verarbeitungssystem dazu konfiguriert ist, die zusammengesetzte Ansicht in einem ersten Betriebsmodus zu erzeugen, und eine zweite zusammengesetzte Ansicht zu erzeugen, die in einem zweiten Betriebsmodus basierend auf Reflexionsbildgebung und Fluoreszenzbildgebung ist, wobei das Verarbeitungssystem dazu konfiguriert ist, den ersten optischen Abbildungssensor zu verwenden, um die Reflexionsbildgebung durchzuführen, und den zweiten optischen Abbildungssensor zu verwenden, um die Fluoreszenzbildgebung in dem zweiten Betriebsmodus durchzuführen.

13. Optisches Abbildungssystem nach einem der vorstehenden Ansprüche, wobei das Verarbeitungssystem dazu konfiguriert ist, ein Anzeigesignal für eine Anzeigevorrichtung (160) des optischen Abbildungssystems zu erzeugen, wobei das Anzeigesignal basierend auf der zusammengesetzten Ansicht ist.

14. Optisches Abbildungssystem nach einem der vorstehenden Ansprüche, wobei das optische Abbildungssystem ein Mikroskopsystem ist, wie zum Beispiel ein chirurgisches Mikroskopsystem.

15. Verfahren für ein optisches Abbildungssystem, wobei das Verfahren umfasst:
Emittieren (210) von Licht mit einer Polarisation in Richtung auf ein Objekt;
Blockieren (220) von Licht mit der Polarisation, damit es nicht zu einem ersten optischen Abbildungssensor einer optischen Abbildungskomponente gelangt, die verwendet wird, um das Objekt abzubilden;
Erhalten (230) von ersten Bildsensordaten von dem ersten optischen Abbildungssensor und zweiten Bildsensordaten von einem zweiten optischen Abbildungssensor der optischen Abbildungskomponente; und
Erzeugen (240) einer zusammengesetzten Ansicht basierend auf den ersten Bildsensordaten und basierend auf den zweiten Bildsensordaten, wobei die zweiten Bildsensordaten eine Darstellung von spiegelnden Reflexionen des von dem Beleuchtungssystem emittierten Lichts, wie von dem Objekt reflektiert, umfassen,
wobei das Verfahren **dadurch gekennzeichnet ist, dass** es weiter das Erzeugen einer weiteren Darstellung der spiegelnden Reflexionen basierend auf den zweiten Bildsensordaten und das Kombinieren der weiteren Darstellung der spiegelnden Reflexionen mit der in den ersten Bildsensordaten enthaltenen Darstellung des Objekts umfasst.

## Revendications

1. Système d'imagerie optique (100 ; 300 ; 400 ; 500 ; 600) comprenant :
un composant d'imagerie optique (120 ; 610) comprenant un premier capteur d'imagerie optique (122) et un second capteur d'imagerie optique (124), le composant d'imagerie optique étant approprié pour imager un objet (10) ;
un système d'éclairage (130) pour émettre de la lumière présentant une polarisation vers l'objet ;
un filtre de polarisation (140) configuré pour bloquer l'arrivée de la lumière présentant la polarisation au premier capteur d'imagerie optique ;
un système de traitement (110 ; 620) comprenant un ou plusieurs processeurs (114) et un ou plusieurs dispositifs de stockage (116), dans lequel le système de traitement est configuré pour :
obtenir des premières données de capteur d'imagerie à partir du premier capteur d'imagerie optique et des secondes données de capteur d'imagerie à partir du second capteur d'imagerie optique,
générer une vue composite sur la base des premières données de capteur d'imagerie et sur la base des secondes données de capteur d'imagerie, dans lesquelles les secondes données de capteur d'imagerie comprennent une représentation de réflexions spéculaires de la lumière émise par le système d'éclairage, telle que réfléchie par l'objet,
**caractérisé en ce que** le système de traitement est en outre configuré pour générer une autre représentation de réflexions spéculaires sur la base des secondes données de capteur d'imagerie, et combiner l'autre représentation de réflexions spéculaires avec une représentation de l'objet incluse dans les premières données de capteur d'imagerie.

2. Système d'imagerie optique selon la revendication 1, dans lequel le filtre de polarisation est configuré pour filtrer la lumière présentant la polarisation, de sorte que les réflexions spéculaires de la lumière émise par le système d'éclairage sont omises d'une représentation de l'objet incluse dans les premières données de capteur d'imagerie.

3. Système d'imagerie optique selon l'une des revendications 1 à 2, dans lequel le système d'éclairage comprend une première source de lumière (132) et une seconde source de lumière (134), la première source de lumière configurée pour émettre de la lumière dans un premier spectre de longueurs d'onde et la seconde source de lumière étant configurée pour émettre de la lumière dans un second spectre de longueurs d'onde, le premier capteur d'imagerie optique étant configuré pour détecter de la lumière dans le premier spectre de longueurs d'onde et le second capteur d'imagerie optique étant configuré pour détecter de la lumière dans le second spectre de longueurs d'onde, le premier spectre de longueurs d'onde ne se chevauchant pas avec le second spectre de longueurs d'onde.

4. Système d'imagerie optique selon la revendication 3, dans lequel le système d'éclairage comprend un filtre de polarisation étant configuré pour filtrer la lumière émise par la première source de lumière, de sorte que la lumière émise dans le premier spectre de longueurs d'onde présente la polarisation, dans lequel la seconde source de lumière est incluse dans le système d'éclairage sans filtre de polarisation.

5. Système d'imagerie optique selon l'une quelconque des revendications précédentes, dans lequel le second capteur d'imagerie optique est configuré pour détecter indépendamment la lumière dans deux ou plusieurs bandes de longueurs d'onde mutuellement séparées, dans lequel le système d'éclairage comprend deux ou plusieurs sources de lumière spatialement séparées (132 ; 134) configurées pour émettre de la lumière dans les deux ou plusieurs bandes de longueurs d'onde vers l'objet depuis deux ou plusieurs directions différentes.

6. Système d'imagerie optique selon la revendication 5, dans lequel les secondes données de capteur d'imagerie comprennent une représentation de réflexions spéculaires de la lumière émise par le système d'éclairage, telle que réfléchie par l'objet, dans lequel le système de traitement est configuré pour, pour chacune des deux ou plusieurs bandes de longueurs d'onde mutuellement séparées, générer une autre représentation séparée des réflexions spéculaires de la lumière émise dans la bande de longueurs d'onde respective sur la base des secondes données de capteur d'imagerie, et combiner les deux ou plusieurs autres représentations résultantes des réflexions spéculaires avec la représentation de l'objet incluse dans les premières données de capteur d'imagerie dans la vue composite.

7. Système d'imagerie optique selon la revendication 6, dans lequel le système de traitement est configuré pour animer les réflexions spéculaires dans la vue composite en faisant varier une contribution des deux ou plusieurs autres représentations dans la vue composite.

8. Système d'imagerie optique selon l'une des revendications 6 ou la revendication 7, dans lequel le système de traitement est configuré pour animer les réflexions spéculaires dans la vue composite en faisant varier la contribution des deux ou plusieurs autres représentations dans la vue composite sur la base de la direction depuis laquelle la lumière respective est émise.

9. Système d'imagerie optique selon l'une des revendications 6 à 8, dans lequel le composant d'imagerie optique est un composant d'imagerie optique stéréoscopique, tel qu'un microscope stéréoscopique, comprenant deux premiers capteurs d'imagerie optique et deux seconds capteurs d'imagerie optique, les deux premiers capteurs d'imagerie optique étant configurés pour générer les premières données de capteur d'imagerie et les deux seconds capteurs d'imagerie optique étant configurés pour générer les secondes données de capteur d'imagerie, dans lequel le système de traitement est configuré pour générer des autres représentations séparées des réflexions spéculaires pour chacune des deux ou plusieurs bandes de longueurs d'onde mutuellement séparées et pour chacun des deux seconds capteurs d'imagerie optique.

10. Système d'imagerie optique selon l'une quelconque des revendications précédentes, comprenant en outre un second filtre de polarisation (150) configuré pour admettre la lumière présentant la polarisation au second capteur d'imagerie optique.

11. Système d'imagerie optique selon l'une quelconque des revendications précédentes, dans lequel le second capteur d'imagerie optique est inclus dans le composant d'imagerie optique sans filtre de polarisation, dans lequel le système de traitement est configuré pour générer une représentation de réflexions spéculaires montrées dans les secondes données de capteur d'imagerie sur la base d'une saturation de pixels des secondes données de capteur d'imagerie causée par les réflexions spéculaires.

12. Système d'imagerie optique selon l'une des revendications précédentes, dans lequel le système de traitement est configuré pour générer la vue composite dans un premier mode de fonctionnement, et générer une seconde vue composite qui est basée sur l'imagerie en réflexion et l'imagerie de fluorescence dans un second mode de fonctionnement, le système de traitement étant configuré pour utiliser le premier capteur d'imagerie optique pour réaliser l'imagerie en réflexion et pour utiliser le second capteur d'imagerie optique pour réaliser l'imagerie de fluorescence dans le second mode de fonctionnement.

13. Système d'imagerie optique selon l'une quelconque des revendications précédentes, dans lequel le système de traitement est configuré pour générer un signal d'affichage pour un dispositif d'affichage (160) du système d'imagerie optique, le signal d'affichage étant basé sur la vue composite.

14. Système d'imagerie optique selon l'une quelconque des revendications précédentes, dans lequel le système d'imagerie optique est un système de microscope, tel qu'un système de microscope chirurgical.

15. Procédé pour un système d'imagerie optique, le procédé comprenant :
émettre (210) de la lumière présentant une polarisation vers un objet ;
bloquer (220) l'arrivée de la lumière présentant la polarisation à un premier capteur d'imagerie optique d'un composant d'imagerie optique utilisé pour imager l'objet ;
obtenir (230) des premières données de capteur d'imagerie à partir du premier capteur d'imagerie optique et des secondes données de capteur d'imagerie à partir d'un second capteur d'imagerie optique du composant d'imagerie optique ; et générer (240) une vue composite sur la base des premières données de capteur d'imagerie et sur la base des secondes données de capteur d'imagerie, dans lesquelles les secondes données de capteur d'imagerie comprennent une représentation des réflexions spéculaires de la lumière émise par le système d'éclairage, telle que réfléchie par l'objet,
le procédé étant **caractérisé en ce qu'**il comprend en outre la génération d'une autre représentation des réflexions spéculaires sur la base des secondes données de capteur d'imagerie, et la combinaison de l'autre représentation des réflexions spéculaires avec la représentation de l'objet incluse dans les premières données de capteur d'imagerie.
